# EUROPÄISCHE PATENTANMELDUNG

(11) **EP 2 682 427 A1**
(43) Veröffentlichungstag der Anmeldung: **08.01.2014**
(21) Anmeldenummer: 12175270.3
(22) Anmeldetag: 06.07.2012
(51) Int. Cl.: C08L 51/08, C08J 9/16, C08L 75/04, C08L 25/08, C08F 283/00, C08G 18/00, C08F 2/18

(54) **Polyurethan basierte expandierbare Polymerpartikel**

(71) Anmelder: BASF SE, 67056 Ludwigshafen (DE)
(72) Erfinder: Die Erfindernennung liegt noch nicht vor
(74) Vertreter: Rippel, Hans Christoph

(57) **Zusammenfassung**

Expandierbare Polymerpartikel, enthaltend mindestens ein thermoplastisches Polyurethan (TPU) mit einem Vicat Erweichungspunkt (nach ISO 306/ASO) von unter 80°C und 5 bis 95 Gew.-%, mindestens eines durch radikalische Polymerisation erhältlichen Polymers, bezogen auf die Summe von TPU und durch radikalische Polymerisation erhältlichem Polymer, wobei das durch radikalische Polymerisation erhältliche Polymer als Kamm-, Pfropf- oder Copolymer an das TPU gebunden sind, eignen sich zur Herstellung von Formkörpern, insbesondere für den Einsatz als Dämmmaterial.

## Beschreibung

Die Erfindung betrifft expandierbare Polymerpartikel auf Basis von thermoplastischen Polyurethanen (TPU) enthaltend ein Styrolpolymer und TPU, ein Verfahren zu deren Herstellung, Formkörper erhältlich aus den Polymerpartikeln, sowie deren Verwendung als elastomeren Schaumstoff.

Schäume auf Basis von Styrolpolymeren sind seit längerem bekannt und werden in großem Umfang beispielsweise zur Herstellung von Isoliermaterialien verwendet. Den großen Vorteilen dieser Materialien, beispielsweise was Isoliereigenschaften, geringe Dichte, Wasserunempfindlichkeit und Expandierfähigkeit angeht, stehen Nachteile hinsichtlich chemischer Beständigkeit und Schlagzähigkeit entgegen.

Weiterhin sind thermoplastische Polyurethane in geschäumter Form bekannt. Sie zeichnen sich beispielsweise durch hervorragende Elastizität, Transparenz, Abriebsfestigkeit und Chemikalienbeständigkeit aus, weisen aber Nachteile wie mangelnde Formbeständigkeit und unbefriedigende Schäumbarkeit auf. So ist es technisch schwer möglich einen expandierbaren Partikel-Schaumstoff aus TPU herzustellen, da TPU physikalische Treibmittel wie Pentan sehr schnell durch Diffusion wieder an die Umgebung abgibt (schlechtes Treibmittelhaltevermögen). Desweiteren können physikalische Treibmittel in reinem TPU keinen ausreichenden Schäumdruck aufbauen so dass sich reines treibmittelhaltiges TPU nicht einem EPS-Vorschäumer expandieren lässt.

Es gibt auch Ansätze, die vorteilhaften Eigenschaften von Schäumen auf Basis von Polystyrol und solchen auf TPU-Basis zu verbinden.

Die Herstellung von expandierbaren TPU durch Compoundierung von TPU mit einen Treibmittel durch extrusionsbasierte Verfahren ist z.B. in der Anmeldung WO 2007/082838 beschrieben.

In der WO 2010/010010 sind thermoplastische Polymerblends auf der Basis von thermoplastischem Polyurethan und Styrolpolymerisat, daraus hergestellte Schaumstoffe und zugehörige Herstellungsverfahren beschrieben.

In der JP-A 1980-080440 ist ein Verfahren zur Herstellung expandierbarer Polymerpartikel beschrieben, wobei 20 bis 80 Gew.-% TPU Elastomerpartikel und 80 bis 20 Gew.-% eines Monomers oder Methacrylatesters in einem wässrigen Medium suspendiert und polymerisiert werden.

Die JP-A 2007-231068 offenbart expandierbare styrolmodifizierte TPU Partikel, enthaltend 100 Gewichtsteile TPU und 20 bis 300 Gewichtsteile eines Styrolpolymers, wobei Styrolpolymerpartikel einer Größe von 0,5 µm oder weniger in dem TPU dispergiert sind. Obwohl mit den bekannten Materialien bereits gute Ergebnisse erzielt werden, bleibt doch ein breiter Raum für Verbesserungen, beispielsweise was das Treibmittelhaltevermögen bei gleichzeitig hoher Elastizität solcher Materialien angeht.

Aufgabe war es daher, Materialien auf Basis von TPU zu entwickeln, welche insbesondere über einen Zeitraum von Wochen ein physikalisches Treibmittel (Pentan) halten können, auf handelsüblichen EPS-Maschinen verarbeitet werden können und trotzdem noch ausreichend elastomere Eigenschaften besitzen.

Es wurde gefunden, dass sich Polymere aus TPU und einem durch radikalische Polymerisation erhältlichen Polymer mit den gewünschten vorteilhaften Eigenschaften herstellen lassen, wenn das eingesetzte TPU einen Vicat-Erweichungspunkt von weniger als 80°C (nach ISO 306/A50) aufweist und das durch radikalische Polymerisation erhältliche Polymer als Kamm-, Pfropf- oder Copolymer an das TPU gebunden ist.

Gegenstand der Erfindung sind daher expandierbare Polymerpartikel, enthaltend mindestens ein Thermoplastisches Polyurethan (TPU) mit einem Vicat-Erweichungspunkt (nach ISO 306/A50) von unter 80°C und 5 bis 95 Gew.-%, bezogen auf die Summe von TPU und durch radikalische Polymerisation erhältlichem Polymer, mindestens eines durch radikalische Polymerisation erhältlichen Polymers, wobei das durch radikalische Polymerisation erhältliche Polymer als Kamm-, Pfropf- oder Copolymer an das TPU gebunden ist.

Weiterhin Gegenstand der Erfindung sind expandierte Polymerpartikel gemäß der Erfindung, erhältlich durch Vorschäumen der erfindungsgemäßen Polymerpartikel.

Ebenso Gegenstand der Erfindung sind Schaumformteile, erhältlich aus den vorgeschäumten erfindungsgemäßen Polymerpartikeln.

Weiterhin Gegenstand der Erfindung ist ein Verfahren zur Herstellung der erfindungsgemäßen Polymerpartikel umfassend die Schritte:
a) Dispergieren eines oder mehrerer TPU mit einer Vicat-Temperatur von weniger als 80°C, 5 bis 95 Gew.-% eines oder mehrerer radikalisch polymerisierbare Monomere und gegebenenfalls Comonomere, bezogen auf die Summe aus TPU und den genannten Monomeren, eines Polymerisationsinitiators, eines Dispergiermittels und gegebenenfalls weiterer Zusatzstoffe und/oder Polymerisationshilfsstoffe in einem wässrigen Medium bei einer Temperatur, bei der keine substantielle Polymerisation der Styrolmonomere erfolgt;
b) gegebenenfalls Rühren der erhaltenen Dispersion für eine bis 24 h bei einer Temperatur, bei der keine substantielle Polymerisation der radikalische polymerisierbaren Monomere stattfindet.
c) Polymerisation der radikalisch polymerisierbaren Monomere in Form eines Kamm-, Pfropf - oder Copolymers an das TPU, und
d) Zugabe eines physikalischen Treibmittels zu der wässrigen Suspension.

Ebenso Gegenstand der Erfindung ist die Verwendung der erfindungsgemäßen Schaumformteile als elastomerer Schaumstoff, vorzugsweise als Dämmmaterial für Fassaden, Wohnbereiche und/oder Trittschalldämmung, für Bodenbeläge von Sportanlagen, Schuhsohlen und/oder Stoßstangen für Automobile.

Thermoplastische Polyurethane (TPU) und Verfahren zu deren Herstellung sind bekannt.

Erfindungsgemäß werden TPU-Typen mit einer Vicat-Temperatur von weniger als 80°C, bevorzugt von 60 bis 79°C, besonders bevorzugt von 60 bis 75°C eingesetzt.

Die Vicat-Temperatur wird dabei nach ISO 306 gemäß Verfahren ASO, d.h. mit einer Kraft von 10 N und einer Heizrate von 50°C/h bestimmt /ISO 306/ASO).

Die Bestimmung der Vicat-Temperatur erfolgt an treibmittelfreien Proben, welche keine für die gewünschten Anwendungen üblichen Additive enthalten.

Eine erfindungsgemäße Vicat-Temperatur kann nach dem Fachmann bekannten Methoden, beispielsweise durch Verwendung entsprechender Monomerbausteine, bei der Herstellung des TPU (siehe unten) erzielt werden.

Erfindungsgemäß eingesetzte TPU Typen haben bevorzugt eine Shore Härte A im Bereich von 50 bis 150, besonders bevorzugt von 65 bis 85 (gemessen nach DIN 53505).

Der Schmelzbereich (Glasübergang) liegt bevorzugt im Bereich von -20°C bis -60°C.

Bevorzugt liegt die Reißdehnung nach DIN 53504-S2 > 550 %.

Als weitere erfindungswesentliches Merkmal neben der angegebenen Vicat-Temperatur müssen erfindungsgemäß eingesetzte TPU funktionelle Gruppen enthalten, welche unter den typischen Bedingungen einer radikalischen Polymerisation von beispielsweise Styrol (T= 100-140°C; 0.1-3 Gew.-% Peroxidinitiator wie Dicumylperoxid) ein Kamm-, Pfropf- oder Copolymer mit den radikalisch polymerisierbaren Monomeren ausbilden. Dies wird in einer ersten Variante durch Verwendung einer Di- bzw. Monoisocyanatkomponente mit radikalisch abstrahierbaren Wasserstoffatomen wie 4,4'-, 2,4'- und/oder 2;2'-Diphenylmethan-diisocyanat (MDI) sowie deren Gemische, bei der Herstellung der TPU nach grundsätzlich bekannter Weise (siehe unten) erreicht.

In einer zweiten Variante werden bei der Herstellung der TPU nach bekannter Weise (siehe unten) radikalisch polymerisierbare Monomere mit Gruppen (Alkokol-, Epoxid-, Amin-Gruppen) zugesetzt, die eine Polyadditionsreaktion mit Isocyanaten eingehen können. Als Monomere sind dabei besonders folgende Verbindungen bevorzugt: Hydroxyethylmethacrylat; 1,2- und 1,3-Dihydroxypropylmethacrylat; Glycidylmethacrylat, ortho-, meta- und para-Hydroxystyrol, meta - und para-Aminostyrol, Methacrylamid, 1,4-Butendiol, 1,4-Butindiol und/oder Polybutadiendiol.

TPU und Verfahren zu deren Herstellung sind vielfach beschrieben, beispielsweise Gerhard W. Becker und Dietrich Braun, Kunststoff Handbuch, Band 7 "Polyurethane",Carl Hanser Verlag München Wien 1993.

Bei allen in dieser Schrift genannten Molmassen, angegeben in [kg/mol], handelt es sich um die zahlenmäßig mittlere Molmasse.

In bevorzugten Ausführungsformen wird TPU durch Umsetzung aus einer Mischung von Isocyanaten (a) mit gegenüber Isocyanaten reaktiven Verbindungen (b), bevorzugt mit einem Molekulargewicht von 0,5 kg/mol bis 10 kg/mol und gegebenenfalls Kettenverlängerungsmitteln (c), bevorzugt mit einem Molekulargewicht von 0,05 kg/mol bis 0,5 kg/mol hergestellt.

In weiteren bevorzugten Ausführungsformen wird zur Herstellung von TPU der Mischung weiterhin mindestens ein Kettenregler (c1), ein Katalysator (d) und ggf. mindestens ein Füll-, Hilfs - und/oder Zusatzstoff zugesetzt. Die mit den Kleinbuchstaben ggf. zusätzlich mit Ziffer bezeichneten Substanzgruppen werden auch als Komponenten angesprochen.

Die bei der Herstellung der TPU üblicherweise verwendeten Komponenten (a), (b), (c), (c1), (d) und (e) werden im Folgenden beispielhaft beschrieben und umfassen die folgenden Stoffgruppen: Isocyanate (a), gegenüber Isocyanaten reaktive Verbindungen (b), Kettenverlängerer (c), Kettenregler (c1), Katalysatoren (d) und/oder mindestens ein üblicher Füll-, Hilfs- und/oder Zusatzstoff.

Zur Herstellung von TPU wird auf jeden Fall eine Mischung aus Isocyanaten (a) und gegenüber Isocyanaten reaktive Verbindungen (b) benötigt. Der weitere Zusatz der Komponenten (c), (c1), (d) und (e) ist optional und kann einzeln oder in allen möglichen Variationen erfolgen. Dabei ist mit Komponente jeweils eine einzelne Substanz gemeint oder eine Mischung der zu dieser Komponente gehörenden Substanzen.

Die Komponenten Isocyanate (a), gegenüber Isocyanaten reaktive Verbindungen (b), und Kettenverlängerer (c) und, sofern verwendet, auch die Kettenregler (c1) werden als Aufbaukomponenten angesprochen.

In bevorzugten Ausführungsformen werden als organische Isocyanate (a) aliphatische, cycloaliphatische, araliphatische und/oder aromatische Isocyanate, weiter bevorzugte Diisocyanate eingesetzt. Beispiele für bevorzugte Diisocyanaten sind Tri-, Tetra-, Penta-, Hexa-, Hepta - und/oder Oktamethylendiisocyanat, 2-Methylpentamethylendiisocyanat-1 ,5, 2-Ethylbutylendiisocyanat-1,4, Pentamethylendiisocyanat-1,5, Butylendiisocyanat-1,4, 1-Isocyanato-3,3,5-trimethyl-5-isocyanatomethylcyclohexan (Isophorondiisocyanat, IPDI), 1,4- und/oder 1,3-Bis(isocyanatomethyl)cyclohexan (HXDI), 1,4-Cyclohexandiisocyanat, 1-Methyl-2,4- und/oder-2,6-cyclohexandiisocyanat und/oder 4,4'-, 2,4'- und 2,2'-Dicyclohexylmethandiisocyanat, 2,2'-, 2,4'- und/oder 4,4'-Diphenylmethandiisocyanat (MDI), 1,5-Naphthylendiisocyanat (NDI), 2,4-und/oder 2,6-Toluylendiisocyanat (TDI), Diphenylmethandiisocyanat, 3,3'-Dimethyl-diphenyldiisocyanat, 1,2-Diphenylethandiisocyanat und Phenylendiisocyanat.

Besonders bevorzugt sind 4,4'-, 2,4'- und 2,2'-Diphenylmethandiisocyanat (MDI) sowie deren Gemische. Die organischen Diisocyanate können gegebenenfalls in untergeordneten Mengen, z. B. in Mengen bis zu 3 Mol-%, vorzugsweise bis zu 1 Mol-%, bezogen auf das organische Diisocyanat, durch ein tri- oder höherfunktionelles Polyisocyanat ersetzt werden, wobei dessen Menge jedoch so begrenzt werden muss, dass noch thermoplastisch verarbeitbare Polyurethane erhalten werden. Eine größere Menge an derartigen mehr als difunktionellen Isocyanaten wird zweckmäßigerweise durch die Mitverwendung von weniger als difunktionellen Verbindungen mit reaktiven Wasserstoffatomen ausgeglichen, so dass eine zu weit gehende chemische Vernetzung des Polyurethans vermieden wird.

Als gegenüber Isocyanaten reaktive Verbindungen (b) werden in bevorzugten Ausführungsformen Polyetherole, Polyesterole, und/oder Polycarbonatdiole, die üblicherweise auch unter dem Begriff "Polyole" zusammengefasst werden, verwendet.

TPU wird bevorzugt aus Polyetheralkohol hergestellt, besonders bevorzugt wird Polyetherdiol verwendet.

Geeignete Polyetherdiole können nach bekannten Verfahren, beispielsweise durch anionische Polymerisation von Alkylenoxiden mit Alkalihydroxiden, wie Natrium- oder Kaliumhydroxid, oder Alkalialkoholaten, wie Natriummethylat, Natrium- oder Kaliumethylat oder Kaliumisopropylat, als Katalysatoren und unter Zusatz mindestens eines Startermoleküls, das 2 bis 3, vorzugsweise 2, reaktive Wasserstoffatome gebunden enthält, oder durch kationische Polymerisation mit LewisSäuren als Katalysatoren aus einem oder mehreren Alkylenoxiden mit 2 bis 4 Kohlenstoffatomen im Alkylenrest hergestellt werden. Geeignete Alkylenoxide sind beispielsweise Tetrahydrofuran, 1,3-Propylenoxid und insbesondere bevorzugt Ethylenoxid und 1;2-Propylenoxid Die Alkylenoxide können einzeln, alternierend nacheinander oder als Mischungen verwendet werden. Als Startermoleküle kommen beispielsweise in Betracht: Wasser, organische Dicarbonsäuren, wie Bernsteinsäure, Adipinsäure und vorzugsweise zweiwertige, gegebenenfalls Etherbrücken gebunden enthaltende Alkohole, wie z. B. Ethandiol Propandiol-1,2, Butandiol-1,4, Diethylenglykol, Hexandiol, 1,6- und 2-Methylpentandiol-1,5. Die Startermoleküle können einzeln oder als Gemische eingesetzt werden. Insbesondere geeignet und bevorzugt sind die hydroxylgruppenhaltigen Polytetrahydrofurane (PTHF).

Die im wesentlichen linearen Polyetherole besitzen üblicherweise mittlere Molekulargewichte von 500 bis 8000, vorzugsweise 600 bis 6000, wobei das PTHF ein bevorzugtes mittleres Molekulargewicht von 500 bis 2500, insbesondere von 800 bis 2000, aufweist Sie können sowohl einzeln als auch in Form von Mischungen untereinander zur Anwendung kommen.

Ein besonders bevorzugtes Polyetherdiol ist Polytetrahydrofuran. Bevorzugt werden die Polyetheralkohole und Polytetrahydrofuran mit einem Molekulargewicht zwischen 0,6 kg/mol und 2,5 kg/mol verwendet. Die Polyetheralkohole werden einzeln oder auch als Mischung verschiedener Polyetheralkohole eingesetzt.

In alternativen Ausführungsformen wird TPU aus Polyesteralkohol hergestellt. In einer bevorzugten Ausführungsform wird hierfür Polyesterdiol verwendet. Ein bevorzugtes Polyesterdiol wird aus Adipinsäure und Butan-1,4-diol hergestellt. Bevorzugte Ausführungsformen der Polyesteralkohole weisen ein Molekulargewicht zwischen 0,6 kg/mol und 2,5 kg/mol auf.

In weiter bevorzugten Ausführungsformen haben diese Polyole Molekulargewichte von 0,5 kg/mol bis 8 kg/mol, bevorzugt 0,6 kg/mol bis 6 kg/mol, insbesondere 0,8 kg/mol bis 4 kg/mol, und in weiter bevorzugten Ausführungsformen eine mittlere Funktionalität von 1,8 bis 2,3, weiter bevorzugt 1,9 bis 2,2, insbesondere 2. In einer besonders bevorzugten Ausführungsform ist das Polyol ein Polyesteralkohol, bevorzugt aus Polytetrahydrofuran synthetisiert, und hat in einer weiter bevorzugten Ausführungsform ein Molekulargewicht zwischen 0,6 kg/mol und 2,5 kg/mol.

Als Kettenverlängerer (c) werden in bevorzugten Ausführungsformen aliphatische, araliphatische, aromatische und/oder cycloaliphatische Verbindungen eingesetzt, die in weiter bevorzugten Ausführungsformen ein Molekulargewicht von 0,05 kg/mol bis 0,5 kg/mol haben. In einigen bevorzugten Ausführungsformen sind Kettenverlängerer (c) Verbindungen mit zwei funktionellen Gruppen, beispielsweise Diamine und/oder Alkandiole mit 2 bis 10 C-Atomen im Alkylenrest, insbesondere Butandiol-1,4, Hexandiol-1,6 und/oder Di-, Tri-, Tetra-, Penta-, Hexa-, Hepta-, Okta-, Nona- und/oder Dekaalkylenglykole mit 3 bis 8 Kohlenstoffatomen und entsprechende Oligo- und/oder Polypropylenglykole. In weiteren Ausführungsformen werden zur Herstellung von TPU Mischungen der Kettenverlängerer eingesetzt.

In einigen Ausführungsformen werden Kettenregler (c1), üblicherweise mit einem Molekulargewicht von 0,03 kg/mol bis 0,5 kg/mol verwendet. Kettenregler sind Verbindungen, die gegenüber Isocyanaten nur eine funktionelle Gruppe aufweisen. Beispiele für Ketteregler sind monofunktionelle Alkohole, monofunktionelle Amine, bevorzugt Methylamin, und/oder monofunktionelle Polyole. Durch Kettenregler kann das Fließverhalten der Gemische aus den einzelnen Komponenten gezielt eingestellt werden. Kettenregler werden in bevorzugten Ausführungsformen in einer Menge von 0 Gew.-Teile bis 5 Gew.-Teile, weiter bevorzugt von 0,1 Gew.-Teile bis 1 Gew.-Teile, bezogen auf 100 Gew.-Teile der gegenüber Isocyanaten reaktiven Verbindung b) eingesetzt. Kettenregler werden in Ergänzung zu Kettenverlängerern oder an Stelle dieser eingesetzt.

In weiteren Ausführungsformen werden zur TPU Herstellung mindestens ein Katalysator (d) verwendet, der insbesondere die Reaktion zwischen den NCO-Gruppen der Diisocyanate (a) und den gegenüber isocyanaten reaktiven Verbindungen, bevorzugt Hydroxylgruppen der Aufbaukomponenten (b), (c) und c1 beschleunigt. In bevorzugten Ausführungsformen ist der Katalysator ausgewählt aus der Gruppe der tertiären Amine, wie z.B. Triethylamin, Dimethylcyclohexylamin, N-Methylmorpholin, N,N'-Dimethylpiperazin, 2-(Dimethylaminoethoxy)-ethanol, Diazabicyclo-(2,2,2)-octan und ähnliche Substanzen. In weiter bevorzugten Ausführungsformen ist der mindestens eine Katalysator aus der Gruppe der organischen Metallverbindungen ausgewählt und ist, exemplarisch genannt, Titansäureester, eine Eisenverbindung wie z.B. Eisen-(III)- acetylacetonat, eine Zinnverbindung, z.B. Zinndiacetat, Zinndioctoat, Zinndilaurat oder ein Zinndialkylsalz einer aliphatischen Carbonsäure wie Dibutylzinndiacetat, Dibutylzinndilaurat oder ähnliche.

In einigen Ausführungsformen werden die Katalysatoren einzeln eingesetzt, in weiteren Ausführungsformen werden Mischungen von Katalysatoren eingesetzt. In bevorzugten Ausführungsformen ist der Katalysator oder die Mischung von Katalysatoren in Mengen von 0,0001 Gew.-Teilen bis 0,1 Gew.-Teilen pro 100 Gew.-Teile der gegenüber Isocyanaten reaktiven Verbindung (b), bevorzugt Polyhydroxylverbindung, eingesetzt.

Als Beispiele für Hilfs- und/oder Zusatzstoff (e) seien Hydrolyseschutzmittel und Flammschutzmittel genannt. Weitere Zusatzstoffe und Hilfsstoffe können Standardwerken wie beispielsweise o.g. Becker und Braun (1996) entnommen werden.

Neben Katalysatoren (d), aber auch ohne die Verwendung von Katalysatoren können den Aufbaukomponenten (a) bis (c) und gegebenenfalls (c1) auch Hydrolyseschutzmittel wie beispielsweise polymere und niedermolekulare Carbodiimide hinzugefügt werden.

Zur Einstellung der Shore-Härte von TPU können die Aufbaukomponenten (b) und (c) in relativ breiten molaren Verhältnissen variiert werden. In bevorzugten Ausführungsformen verhält sich das molare Verhältnisse von Komponente (b) zum insgesamt eingesetzten Kettenverlängerer (c) wie 10 : 1 bis 1 : 10, bevorzugt 5 : 1 bis 1 : 8, weiter bevorzugt wie 1 : 1 bis 1 : 4, wobei die Härte von TPU mit zunehmendem Gehalt an Kettenverlängerer (c) ansteigt. Auf diese Weise können Shore-Härten von A44 bis D80 eingestellt werden, besonders bevorzugt sind Shore-Härten von A44 bis A84. Die Shore-Härten werden bestimmt nach der DIN 53505.

In weiter bevorzugten Ausführungsformen erfolgt die Umsetzung zu TPU bei üblichen Kennzahlen. Die Kennzahl ist definiert durch das Verhältnis der insgesamt bei der Umsetzung eingesetzten Isocyanatgruppen der Komponente (a) zu den gegenüber Isocyanaten reaktiven Gruppen, d.h. den aktiven Wasserstoffen, der Komponenten (b) und (c). Bei einer Kennzahl von 100 kommt auf eine Isocyanatgruppe der Komponente (a) ein aktives Wasserstoffatom, d.h. eine gegenüber Isocyanaten reaktive Funktion, der Komponenten (b) und (c). Bei Kennzahlen über 100 liegen mehr Isocyanatgruppen als gegenüber Isocyanaten reaktiven Gruppen, beispielsweise OH-Gruppen, vor.

In besonders bevorzugten Ausführungsformen erfolgt die Umsetzung zu TPU bei einer Kennzahl zwischen 60 und 120, weiter bevorzugt bei einer Kennzahl zwischen 80 und 110.

Die Herstellung von TPU wird bevorzugt nach einem der im Folgenden angesprochenen bekannten Verfahren durchgeführt. Bevorzugten Ausführungsformen sind das kontinuierliche Verfahren, beispielsweise mit Reaktionsextrudern, das Bandverfahren, das "One-shot" Verfahren oder das Prepolymerverfahren. Ebenfalls bevorzugte Ausführungsformen sind das diskontinuierliche Verfahren oder das Prepolymerprozess-Verfahren. Bei diesen Verfahren können die zur Reaktion kommenden Komponenten (a) und (b) sowie gegebenenfalls (c), (c1), (d) und/oder (e) nacheinander oder gleichzeitig miteinander vermischt werden, wobei die Reaktion der Komponenten (a) und (b) unmittelbar einsetzt.

Beim Extruderverfahren werden die Aufbaukomponenten (a) und (b) sowie gegebenenfalls die Komponenten (c), (c1), (d) und/oder (e) einzeln oder als Gemisch in den Extruder eingeführt und z.B. bei Temperaturen von 100°C bis 280°C, vorzugsweise bei 140 C bis 250°C zur Reaktion gebracht. Das so erhaltene TPU wird extrudiert, abgekühlt und granuliert. Gegebenenfalls kann es zweckmäßig sein, das erhaltene TPU vor der Weiterverarbeitung bei 80°C bis 120°C, vorzugsweise bei 100°C bis 110°C über einen Zeitraum von 1 bis 24 Stunden zu tempern, d.h. dem Gemisch bei konstanter Temperatur die Möglichkeit zu geben weiter zu reagieren.

Bevorzugte TPU-Typen weisen einen größeren Anteil der Weichphase gegenüber der Hartphase, bevorzugt von 5 bis 30 Gew.-%, besonders bevorzugt von 10 bis 25 Gew.-% Weichphase, auf. Weiterhin ist der Stickstoffgehalt in der Hartphase bevorzugt höher.

Bevorzugte TPU-Typen sind z.B. unter den Bezeichnungen Elastollan®1170 AU, Elastollan®1180, Elastollan®1175 A 10W000 und Elastollan®880 A 13N000 von der BASF Polyurethan GmbH, Lemförde, Deutschland, kommerziell erhältlich.

Besonders bevorzugt ist Elastollan®1170 AU, ein TPU, das aus den Polytetrahydrofurantypen 1000 und 2000(die Zahlen beziehen sich auf das Molgewicht M_{w}, die Produkte sind zum Beispiel von der BASF SE kommerziell erhältlich), einem geringen Anteil 1,4-Butandiol und 4,4'-Diphenylmethandiisocyanat (MDI) erhältlich ist.

Die erfindungsgemäßen Polymerpartikel enthalten neben dem TPU 5 bis 95 Gew.-% (bezogen auf die Summe aus TPU und Styrolpolymeren) an einem oder mehreren durch radikalische Polymerisation erhältlichen Polymeren, die als Kamm-, Pfropf- oder Copolymere an das TPU gebunden sind. Bevorzugt beträgt deren Anteil 80 bis 30, besonders bevorzugt 75 bis 50, ganz besonders bevorzugt 75 bis 65 %.

Als durch radikalische Polymerisation erhältliche Polymere werden bevorzugt Polymere auf Basis von vinylisch ungesättigten Monomeren eingesetzt, beispielsweise (und bevorzugt) Styrol, Acrylate und Methacrylate, Vinylchlorid, Vinylacetat und Acrylnitril und Mischungen davon.

### Bevorzugt sind Styrolpolymere.

Erfindungsgemäß umfasst der Begriff Styrolpolymer Polymere auf Basis von Styrol, alpha-Methylstyrol oder Mischungen von Styrol und alpha-Methylstyrol. Erfindungsgemäße Styrolpolymere basieren auf mindestens 50 Gew.-% Styrol und/oder alpha-Methylstyrol-Monomeren.

Bevorzugt sind als Styrolpolymere Polystyrol, Poly-alpha-methylstyrol und Styrol-alpha-Methylstyrol-Copolymere, möglich sind weiterhin , Styrol-Butadien-Copolymere (SB), Styrol-Acrylnitril-Copolymere (SAN), Acrylnitril-alpha-Methylstyrol-Copolymere (AMSAN), Styrol-Maleinsäuranhydrid-Copolymere (SMA), Styrol-Methylmethacrylat-Copolymere (SMMA), Styrol-N-Phenylmaleinimid-Copolymere (SPMI), Acrylnitril-Styrol-Acrylester (ASA), Methylmethacrylat-Butadien-Styrol (MBS), Methylmethacrylat-Acrylnitril-Butadien-Styrol (MABS)-Polymerisate oder Mischungen davon. Insbesondere bevorzugt ist Polystyrol, d.h. der Einsatz um Styrolmonomeren.

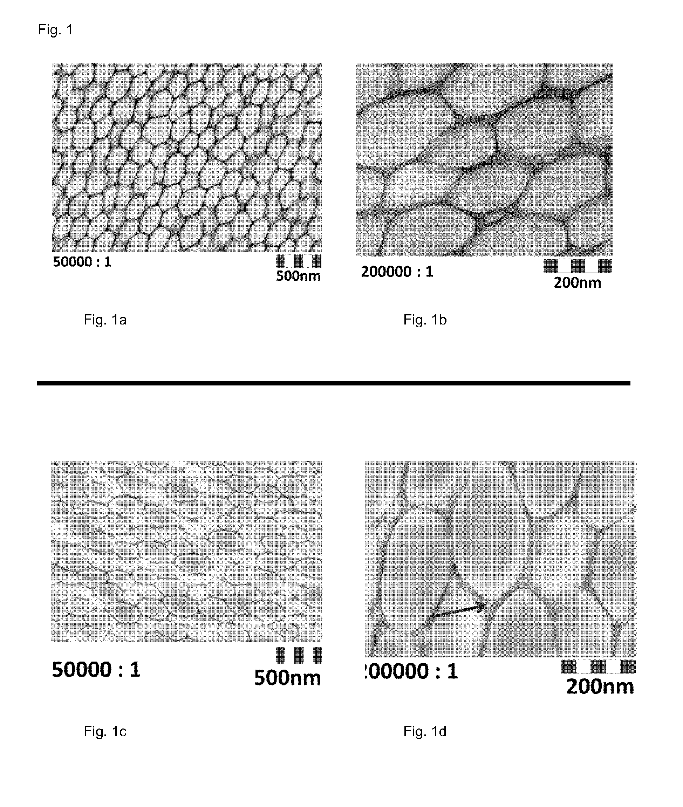

Die erfindungsgemäßen Polymerpartikel zeichnen sich durch eine besondere TPU PhasenMorphologie aus, welche aus einer kontinuierlichen Phase aus TPU Homopolymer und einer diskontinuierlichen Phase aus dem Graftpolymer von TPU und dem durch radikalische Polymerisation erhältlichen Polymer besteht. Dabei besitzt die TPU-Phasen idealerweise eine wie in Fig. 1 (TEM Aufnahme) gezeigte Phasenmorphologie, das Graftpolymer aus TPU und dem durch radikalische Polymerisation erhältlichen Polymer bildet dabei runde bis ellipsenförmige diskontinuierliche Phasen mit einem Durchmesser zwischen 50 und 500 nm aus, diese sind von einem geschlossenen kontinuierlichen TPU Netzwerk umgeben. Die Figur 1 gibt EFTEM (energy filtered transmission electron microscopy) Aufnahmen von expandierbaren TPU-PS-Granulat (40 : 60) mit einem guten Treibmittel-Haltevermögen wieder. In den Figuren 1 und 1 b ist das Kontrastmittel RuO₄, in den Figuren 1c und 1d Phosphorwolframsäure.

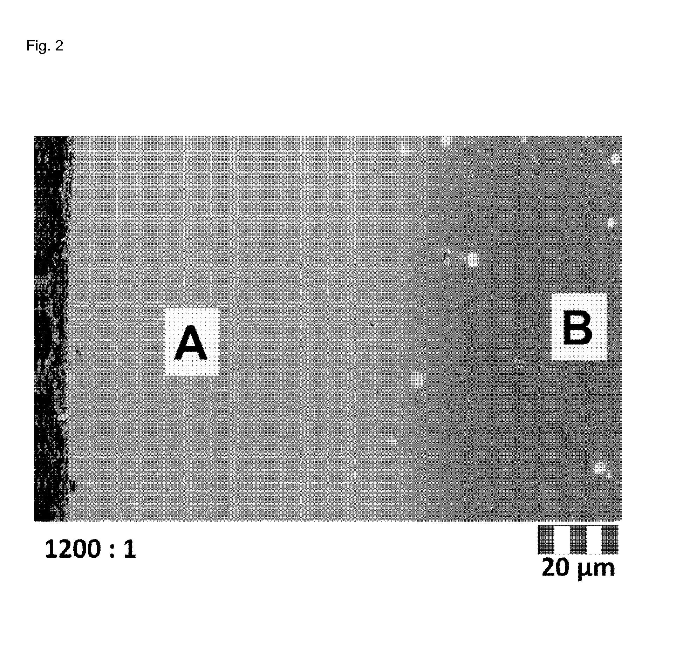

Expandierbare Perlpolymerisate mit einen Polystyrolanteil von 50-70 % zum Beispiel besitzen eine Randzone mit einem Durchmesser von 10-100 µm, welche aus reinem TPU besteht (siehe Fig. 2). Diese Randzone verleiht dem aus dem Polymerisaten hergestellten Schaumstoffen eine besondere Oberfläche (griffig wie reines TPU) wodurch die hergestellten Schaumstoff sehr hochwertig erscheinen. Die Figur 2 zeigt SEM Aufnahmen von expandierbarem TPU-PS-Granulat (50 : 60) mit gutem Treibmittel-Haltevermögen: die Proben wurden mittels Cryo-Histo angeschnitten, mit RuO₄ kontrastiert, anschließend im SEM gesichtet und mittels REM an exemplarischen (Randzone A; Perlmitte B) Stellen abgebildet. Das reine TPU erscheint auf den REM-Aufnahmen heller als das styrolmodifizierte TPU.

Ein wesentliches Element der Erfindung ist, dass die oben beschriebene Polymerstruktur durch radikalische Polymerisation eines oder mehrerer Monomere in dem von diesen Monomer(en) durchquollenen TPU Netzwerk unter geeigneten Bedingungen erhalten werden kann.

Die erfindungsgemäßen Polymerpartikel können zur Verbesserung der mechanischen Eigenschaften oder der Temperaturbeständigkeit gegebenenfalls unter Verwendung von Verträglichkeitsvermittlern mit thermoplastischen Polymeren wie Polyamiden (PA), Polyolefinen wie Polypropylen (PP) oder Polyethylen (PE), Polyacrylaten wie Polymethylmethacrylat (PMMA), Polycarbonaten (PC), Polyestern wie Polyethylenterephthalat (PET) oder Polybutylenterephthalat (PBT), Polyethersulfonen (PES), Polyetherketonen oder Polyethersulfiden (PES) oder Mischungen davon in Anteilen von insgesamt bis maximal 30 Gew.-%, bevorzugt im Bereich von 1 bis 10 Gew.-%, bezogen auf den Polymeranteil, abgemischt werden. Des Weiteren sind Mischungen in den genannten Mengenbereichen auch mit zum Beispiel hydrophob modifizierten oder funktionalisierten Polymeren oder Oligomeren, Kautschuken wie Polyacrylaten oder Polydienen, zum Beispiel Styrol-Butadien-Blockcopolymeren oder biologisch abbaubaren aliphatischen oder aliphatisch/aromatischen Copolyestern möglich.

Die erfindungsgemäßen Polymergranulate enthalten eine Treibmittelkomponente. Die Treibmittelkomponente umfasst ein oder mehrere Treibmittel in einem Anteil von insgesamt 1 bis 15 Gew.-%, bevorzugt 2 bis 6 Gew.-%, besonders bevorzugt 3 bis 5 Gew.-%, bezogen auf. Als Treibmittel eignen sich z.B. aliphatische Kohlenwasserstoffe mit 2 bis 8, vorzugsweise mit 3 bis 8 Kohlenstoffatomen und Mischungen von 2 oder mehr solcher Kohlenwasserstoffe und/oder 2 oder mehr Isomeren solcher Kohlenwasserstoffe. Bevorzugt sind Butan- und Pentanisomere, wie iso-Butan, n-Butan, iso-Pentan, n-Pentan und deren Mischungen, insbesondere Pentanisomere, wie iso-Pentan und n-Pentan, und Mischungen solcher Isomere. Geeignet insbesondere als Cotreibmittel, vorzugsweise in einem Anteil von 0 bis 3 Gew.-%, bevorzugt von 0,25 bis 2,5 Gew.-%, insbesondere 0,5 bis 2,0 Gew.-% (bezogen auf (P)), sind (C₁-C₄)-Carbonylverbindungen, wie Ketone und Ester, C₁-C₄-Alkohole und C₂-C₄-Ether. Bevorzugt als Cotreibmittel sind Ketone, besonders bevorzugt Aceton.

Bei den angegebenen Treibmittelmengen handelt es sich um die bei der Herstellung zugesetzten. Der Gehalt im Produkt und insbesondere nach Lagerung liegt entsprechend niedriger.

Die erfindungsgemäßen expandierten Polymergranulate weisen in der Regel eine Schüttdichte von höchstens300 g/l, bevorzugt 15 bis 200 g/l, besonders bevorzugt im Bereich von 40 bis 150 g/l auf. Bei Verwendung von Füllstoffen können in Abhängigkeit von der Art und Menge des Füllstoffes Schüttdichten im Bereich von 40 bis 150g/l auftreten.

Neben Polymer- und Treibmittelkomponente enthalten die erfindungsgemäßen Polymerpartikel vorzugsweise eine Additivkomponente. Geeignete Additive sind dem Fachmann bekannt.

In einer bevorzugten Ausführungsform wird der Polymerkomponente (P) wenigstens ein Nukleierungsmittel zugesetzt. Als Nukleierungsmittel können z.B. feinteilige, anorganische Feststoffe wie Talkum, Siliziumdioxid, Mika, Ton, Zeolithe, Calciumcarbonat und/oder Polyethylenwachse eingesetzt werden in Mengen von im Allgemeinen 0,1 bis 10 Gew.-%, bevorzugt 0,1 bis 3 Gew.-%, besonders bevorzugt 0,1 bis 1,5 Gew.-%, bezogen auf (P), eingesetzt werden. Der mittlere Teilchendurchmesser des Nukleierungsmittels liegt in der Regel im Bereich von 0,01 bis 100 µm, bevorzugt 1 bis 60 µm. Ein besonders bevorzugtes Nukleierungsmittel ist Talkum, beispielsweise Talkum von der Firma Luzenac Pharma. Das Nukleierungsmittel kann nach dem Fachmann bekannten Methoden zugegeben werden.

Gewünschtenfalls können weitere Additive, wie Füllstoffe (beispielsweise mineralische Füllstoffe, wie Glasfasern), Weichmacher, Flammschutzmittel, IR-Absorber und athermane Materialien, wie Ruß, Kokse, Graphene und/oder Graphit, Aluminiumpulver und Titandioxid, lösliche und unlösliche Farbstoffe, Pigmente, UV-Stabilisatoren und/oder thermische Stabilisatoren zugegeben werden.

Ganz besonders bevorzugt wird Graphit in Mengen von im Allgemeinen 0,05 bis 25 Gew.-%, insbesondere bevorzugt in Mengen von 2 bis 8 Gew.-%, bezogen auf (P), zugegeben. Geeignete Teilchengrößen für das eingesetzte Graphit liegen im Bereich von 1 bis 50 µm, bevorzugt im Bereich von 2 bis 10 µm.

Als vorteilhaft hat sich der Einsatz von UV-Stabilisatoren erwiesen. Speziell bei den Polymeren PS1) wie SMA führt starke UV-Einstrahlung zu einer sichtbaren Vergilbung und zur chemischen Umwandlung des Materials, die mit einer signifikanten Versprödung einhergeht. Für die Wahl geeigneter UV-Stabilisatoren spielt die Reaktivität, z.B. mit SMA, eine entscheidende Rolle. Während Stabilisatoren auf Basis von Benzotriazolen wie Tinuvin 234 die UV-Beständigkeit ohne Veränderung der Verarbeitungs- und Schaumeigenschaften verbessern kann, eignen sich Stabilisatoren auf Basis sterisch gehinderter Amine wie Uvinul 4050 und Tinuvin 770 in geringerem Maße für das erfindungsgemäße Stoffsystem.

Bevorzugt enthält das erfindungsgemäße Granulat als Additiv einen UV-Stabilisator auf Basis von Benzotriazolen in Mengen im Bereich von 0,05 bis 5 Gewichtsanteilen, bevorzugt 0,1 bis 1 Gewichtsanteilen, bezogen auf 100 Gewichtsteile Polymer P.

Aufgrund der Brandschutzbestimmungen in verschiedenen Industrien werden vorzugsweise ein oder mehrere Flammschutzmittel zugegeben. Geeignete Flammschutzmittel sind beispielsweise Tetrabrombisphenol A, bromierte Polystyrol Oligomere, bromierte Butadien-Polystyrol-Copolymere gemäß WO 2007/058736, Tetrabrombisphenol-A-diallylether und Hexabromcyclododecan (HBCD), insbesondere die technischen Produkte, welche im Wesentlichen das α-, β- und γ-Isomer und einen Zusatz von Synergisten wie Dicumyl enthalten. Bevorzugt sind bromierte Aromaten, wie Tetrabrombisphenol A, und bromierte Styrololigomere. Als halogenfreie Flammschutzmittel eignen sich beispielsweise Blähgraphit, roter Phosphor und Phosphorverbindungen, wie Blähgraphit, roter Phosphor, Triphenylphosphat und 9,10-Dihydro-9-oxa-10-phosphaphenanthren-10-oxid.

Als Phosphorverbindungen sind bevorzugt Tris(2-chlorisopropyl)phosphat, Phosphorsäuretriethylester, Diethylethylphosphonate, Cresyldiphenylphosphate, Exolit OP560, Phosphorsäure-6-(diphenoxy-phosphoryloxy)-hexahydro-furo[3,2-b]-furan-3-yl-ester-diphenylester, 9,10-Dihydro-9-oxa-10-phosphaphenanthren-10-oxid oder 6Hdibenz[c,e][1,2]oxaphosphorin-6-oxid). Bevorzugt sind weiterhin organische Peroxide (Dicumylperoxid), Schwefel und Disulfide als Synergisten. Die oben genannten Flammschutzmittel können entweder vor Beginn der Polymerisation in den Monomeren gelöst werden oder durch Extrusion im TPU eingearbeitet werden.

In einer bevorzugten Ausführungsform sind die erfindungsgemäßen Polymerpartikel mit einer oder mehreren Beschichtungskomponenten beschichtet, wobei diese Beschichtungskomponenten gegebenenfalls an einen porenhaltigen Feststoff adsorbiert sein können.

Als Beschichtungskomponenten eignen sich beispielsweise Glycerinester, Zinkstearat, Ester der Zitronensäure und insbesondere feinteilige Silicate.

Besonders bevorzugt sind die entsprechenden Handelsprodukte, welche im Allgemeinen Mischungen der entsprechenden Mono-, Di- und Triester darstellen, die auch geringe Anteile an freiem Glycerin und freien Fettsäuren enthalten können, wie beispielsweise Glycerintri- oder Glycerinmonostearate.

Als besonders bevorzugt hat es sich erwiesen, das Polymerisat mit 0,1 bis 1 Gew.-% hydrophiler Kieselsäure (z.B. Sipernat® FK320; *Fa. Evonic)* zu beschichten.

Möglich als Beschichtungsmaterial sind auch Weichmacher aus der Gruppe bestehend aus a) einem oder mehreren Alkylestern von Cyclohexancarbonsäuren mit einem Siedepunkt ≥ 160 °C, b) einem oder mehreren C₁₀-C₂₁-Alkansulfonsäurephenylestern mit einem Siedepunkt ≥ 150 °C und c) Mischungen der Komponenten a) und b).

Bevorzugt sind die Mono-, Di- und Triglyceride, die aus Glycerin und Stearinsäure, Glycerin und 12-Hydroxystearinsäure und Glycerin und Ricinolsäure erhältlich sind, sowie gemischte Di- und Triglyceride, die neben Stearinsäure, 12-Hydroxystearinsäure und Ricinolsäure aus einer oder zwei Fettsäuren aus der Gruppe Ölsäure, Linolsäure, Linolensäure und Palmitinsäure erhältlich sind.

Die Gesamtmenge an Additiven beträgt im Allgemeinen 0 bis 5 Gew.-%, vorzugsweise 0 bis 0,5 Gew.-%, bezogen auf das Gesamtgewicht der eingesetzten Polymere.

Die erfindungsgemäßen Polymerpartikel sind erhältlich durch ein Verfahren zur Herstellung expandierbarer Polymerpartikel, umfassend die Schritte
a) Dispergieren eines oder mehrerer TPU mit einer Vicat-Temperatur von weniger als 80°C, 5 bis 95 Gew.-% eines oder mehrerer radikalisch polymerisierbarer Monomere und gegebenenfalls Comonomere, bezogen auf die Summe aus TPU und den genannten Monomeren, eines Polymerisationsinitiators, eines Dispergiermittels und gegebenenfalls weiterer Zusatzstoffe und/oder Polymerisationshilfsstoffe in einem wässrigen Medium bei einer Temperatur, bei der keine substantielle Polymerisation der radikalisch polymerisierbaren Monomere erfolgt;
b) gegebenenfalls Rühren der erhaltenen Dispersion für eine bis 24 h bei einer Temperatur, bei der keine substantielle Polymerisation der radikalisch polymerisierbaren Monomere stattfindet.
c) Polymerisation der radikalisch polymerisierbaren Monomere in Form eines Kamm-, Pfropf - oder Copolymers an das TPU, und
d) Zugabe eines physikalischen Treibmittels zu der wässrigen Suspension.

Bei der erfindungsgemäßen Suspensionspolymerisation wird gemäß dem oben Gesagten bevorzugt Styrol allein eingesetzt. Alternativ können auch andere radikalisch polymerisierbare Monomere, wie Alkylstyrole, Divinylbenzol, 1,4-Butandioldimethacrylat, Acrylnitril, I,I-Diphenylether oder α-Methylstyrol und Acrylate verwendet werden.

Bei der Suspensionspolymerisation können neben dem Treibmittel die üblichen Hilfsmittel, wie Peroxidinitiatoren, Suspensionsstabilisatoren, Treibmittel, Kettenüberträger, Expandierhilfsmittel, Keimbildner und Weichmacher zugesetzt werden.

Weiterhin können die genannten Hilfs- und Zusatzstoffe der Suspension zugesetzt werden. Mengen von 3 bis 15 Gew.-%, bezogen auf die Summe aus Monomer und TPU zugesetzt. Man kann sie vor, während oder nach der Polymerisation der Suspension zusetzen.

Es ist vorteilhaft, als Suspensionsstabilisatoren anorganische Pickering Dispergatoren, z.B. Magnesiumpyrophosphat oder Calciumphosphat einzusetzen.

Das verwendete TPU kann, bevor es in der Polymerisation eingesetzt wird durch Unterwassergranulierung zu einem Minigranulat mit einem mittleren Durchmesser von 0,5 bis 1,5 mm verarbeitet werden. So wird nach der Polymerisation ein Produkt mit einer Partikelgröße erhalten, welches auf handelsüblichen EPS Maschinen verarbeitet werden kann. Weiterhin können Nukleierungsmittel wie Talkum oder Polyethylenwachse in Mengen von 0,01 bis 15 Gew.-% mittels Extrusion in das verwendete Polyurethan eingearbeitet werden.

Eine bevorzugte Ausführungsform des Verfahrens ist dadurch gekennzeichnet, dass zunächst eine wässrige Phase, welche 0,1 bis 10 Gew-% der oben genannten Pickeringstabilisatoren, 0,1 bis 0,001 Gew-% eines Tensides (z.B. Natriumdodecylsulfonat) und 1 bis 90 Gew-% TPU Granulat in einem rührbaren Druckautoklaven vorgelegt werden.

Das Monomer, welches gegebenenfalls die oben genannten Hilfsmittel, wie Initiatoren und Flammschutzmittel enthält, wird bei Raumtemperatur bzw. unterhalb der Polymerisationstemperatur in den gerührten Reaktor dosiert. In einer Variation des Verfahrens wird das TPU zunächst bei Raumtemperatur mit dem Monomer, welches die oben genannten Hilfsmittel wie Initiatoren und ggf. Flammschutzmittel enthält, unter Abwesenheit von Wasser zusammengegeben und für 0,5 bis 24 Stunden quellen gelassen. Anschließend wird das von Monomer durchquollene Granulat ebenfalls in den Polymerisationsreaktor überführt, in dem sich die wässrige Phase mit den oben genannten Pickeringstabilisator und dem Tensid befindet.

Es hat sich als vorteilhaft erwiesen, die Reaktionsmischung eine gewisse Zeit (ca. 1 bis 5 Stunden) bei einer erhöhten Temperatur unterhalb der Polymerisationstemperatur zu rühren (vorzugsweise zwischen 10 und 60, z.B. bei 50 °C), um das Anquellen des TPU-Granulats mit dem Monomergemisch zu begünstigen. Anschließend wird die Reaktionsmischung auf die Polymerisationstemperatur aufgeheizt. Überraschenderweise wurde gefunden dass bei einer bevorzugten Polymerisationstemperatur von 110 bis 140 °C (Verwendung eines Peroxidinitiators mit T1/2= 1 h bei 120 bis 135 °C) es zu einer vermehrten Bildung des oben beschriebenen Copolymers aus TPU und Polystyrol kommt.

Bei der Suspensionspolymerisation entstehen perlförmige, im Wesentlichen runde Teilchen mit einem mittleren Durchmesser im Bereich von 0,5 bis 4 mm, wenn mikrogranuliertes TPU eingesetzt wurde bzw. 0,5 bis 2 cm große Teilchen, wenn auf eine Mikrogranulierung des TPU verzichtet wurde. Sie können mit den üblichen Beschichtungsmitteln, z.B. Metallstearaten, Glycerinestern und feinteiligen Silicaten beschichtet werden. Hierbei hat es sich als besonders praktikabel erwiesen, das Polymerisat mit 0,1 bis 1 Gew.-% hydrophiler Kieselsäure (Sipernat® FK320; *Fa. Evonic)* zu beschichten.

Die expandierbaren Polymerpartikel können zu Schaumstoffen mit Dichten von 20 bis 250 g/l, bevorzugt von 50 bis 100 g/l, verarbeitet werden. Hierzu werden die expandierbaren bevorzugten Partikel mit Wasserdampf (z.B. Standard EPS Vorschäumer der Firma Hirsch) vorgeschäumt. Die so vorgeschäumten Partikel werden bevorzugt 10 bis 24 Stunden abgelagert und anschließend bevorzugt in einer Standard EPS-Maschine, zu Blöcken oder Formteilen verarbeitet.

Für Anwendungen, die eine hohe Elastizität mit gutem Rückstellvermögen erfordern (Fußbodenbeläge, Trittschalldämmung) können die erhaltenen Blöcke bzw. Formteile in mechanischen Pressen mittels Be- und Entlastung elastifiziert werden. Dabei hat sich für solche Anwendungen eine unidirektionale Elastifizierung des Materials als vorteilhaft erwiesen. Bei der Elastifizierung wird ein Schaumkörper (Block und Formteil) mit einer Presse auf 10 bis 50 % des Ursprungsvolumens gestaucht. Nach Beendigung der Stauchung wird nach einer Ablagerzeit (bis zu 24 h) der gestauchte Formkörper entsprechend zugeschnitten. Die elastifizierten Materialien weisen ein extrem hohes undirektionales Rückstellungsvermögen auf.

Die Erfindung wird durch die Beispiele näher erläutert.

### Beispiele

### Magnesiumpyrophosphat (MPP)-Fällung

In allen beschriebenen Beispielen wurde eine amorphe MPP-Fällung als Pickering-Stabilisator eingesetzt. Es ist entscheidend, dass die verwendete MPP-Fällung frisch zubereitet wurde (maximal 12 Stunden alt), da sonst keine ausreichende Stabilisierung der Reaktionsansätze erfolgen kann. Die MPP-Fällung kann wie folgt hergestellt werden:

Bei Raumtemperatur (25 °C) werden 931,8 g Natriumpyrophosphat (*Fa. Giulini*) in 32 l Wasser gelöst. Unter Rühren wird zu dieser Lösung eine Lösung von 1728 g Magnesiumsulfatheptahydrad (Bittersalz) zugegeben und anschließend für weitere 5 Minuten gerührt. Es entsteht eine weiße Suspension, welche sich nach einigen Minuten absetzt. In den beschriebenen Beispielen wird die oben genannte Suspension nach kurzem Aufrühren/Schütteln direkt eingesetzt.

### TPU Granulat:

Es wird handelsübliches Polyether-basiertes TPU (Elastollan® 1170AU, Elastollan® 1180A) der BASF Polyurethanes GmbH eingesetzt. Um ein expandierbares Polymergranulat mit einer für EPS typischen Partikelgröße (0,5 bis 4 mm) zu erhalten, hat es sich als vorteilhaft erwiesen, das TPU mittels Extruder und Unterwassergranuliereinheit in ein Mikrogranulat mit einer Partikelgröße zwischen 0,5 bis 2 mm zu überführen.

Weiterhin hat es sich als vorteilhaft erwiesen, bei der Mikrogranulierung 0,1 bis 1 Gew.-% Talkum (Microtalk IT extra, *Fa. Mondo Minerals)* einzuarbeiten. Dieses sorgt später für eine homogenere Schaumstruktur (Nukleierungsmittel)

### Beispiel 1

### 1.1 Anquellen

In einer 5 l Edelstahlkanne (Milchkanne) wurden 3.00 kg Styrol, in dem 21,0 g Dicumylperoxid (Perkadox® BC-FF, *Fa. AkzoNobel)* gelöst waren, vorgelegt. In einem Siebeinsatz wurden 350 g TPU-Minigranulat, welches 0,5 Gew% Talkum enthielt, (Elastollan® 1170AU, für 4 Stunden in die Styrol-Lösung gehängt. Anschließend entfernt man den Siebeinsatz aus der Styrolperoxid-Lösung und ließ das angequollene Material 5 Minuten lang abtropfen. Das angequollene TPU-Granulat hatte nach dem Abtropfen eine Masse von 965 g und wurde über Nacht (ca. 10 h) in einem PE-Kunststoffkanister gelagert.

### 1.2 Polymerisation

Das angequollene TPU wurde in einen 6 l Druckautoklaven [EPS-Reaktor, maximal Druck: 20 bar, Blattrührer; Rührerdrehzahl 300 U/Min] überführt, in dem sich 3 kg VE-Wasser, 803 g MPP-Fällung und 42 g 2%ige Lösung des Emulgators E30 (hergestellt aus E30-40 der *Fa. Leuna Tenside GmbH)* befanden. Nachdem der Reaktor verschlossen und mit Stickstoff beaufschlagt wurde (Inertisierung,) wurde innerhalb von 1,5 Stunden auf 125 °C geheizt. Eine Stunde nach Erreichen von 125 °C wurden 80 g iso-Pentan innerhalb von 40 Minuten in den Reaktor dosiert. Es wurde für weitere 6,5 Stunden eine Temperatur von 125 °C gehalten, anschließend wurde auf Raumtemperatur gekühlt. Die erhaltenen treibmittelhaltigen Polymerisatperlen wurden abdekantiert, von Innenwasser getrocknet und mit 0,3 Gew.-% Fällungskieselsäure (Sipernat FK320, *Fa. Evonik*) beschichtet. Das Material wurdezwecks Equilibrierung mindestens 2 bis 5 Tage in einer druckdichten Dose (Zinkbox) abgelagert.

Vom erhaltenen Polymerisat wurden die Wasserwerte (Titration nach Fischer) und die flüchtigen Anteile (Gravimetrisch nach 2 h bei 120°C) nach 5 Tagen Lagerung in einer gasdichten Dose (Zinkbox) bestimmt:
Wassergehalt: 0.45 %
Flüchtige Anteile bei 120°C, 2h getrocknet: 4.52 %

Es wurde der Sickstoffgehalt des Polymerisates bestimmt (Kjeldahlsche Stickstoffbestimmung). Durch Vergleich mit dem eingesetzten TPU wurde der TPU Gehalt des Polymerisates berechnet

| Stickstoffanalytik | | TPU Gehalt |
|---|---|---|
| Polymerisat | 0,92 % | 33 % |
| Referenz TPU | 2,8 % | 100 % |

Um die Expandierbarkeit zu beurteilen, wurden Schäumkurven in einem drucklosen Wasserdampf-Vorschäumer (Rauscherkasten, T= 98-102°C) nach 5 Tagen Lagerung in einer gasdichten Dose (Zinkbox) angefertigt. Es wurde nach definierter Vorschäumzeit die Schüttdichte des vorgeschäumten Materials gemessen.

Das beschichtete Polymerisat wurde nach 5 Tagen Lagerung in einer gasdichten Zinkbox mit einem Standard-EPS Vorschäumer auf eine Dichte von 50 g/l vorgeschäumt (Dampfdruck 0.2 bar).

Das vorgeschäumte Material 10 Stunden abgelagert wurde und in einer Standard EPS-Verarbeitungsmachine zu runden Formteilen verarbeitet. Folgende Verarbeitungsparameter haben sich als praktikabel erwiesen:

| **Produkt** | **Schüttdichte** | **Druck** | **Formteil** | **Schaumdruck max.** | **Entformzeit** | **Bemerkung** |
|---|---|---|---|---|---|---|
| | **[g/L]** | **[bar]** | **Nummer** | **[bar]** | **[s]** | |
| **gemäß Beispiel 1** **60g/L** | 55,5 | 1,1 | 1 | 1,56 | 281 | 1,3 / 1,1 bar |
| | | | 2 | 1,55 | 277 | " |
| | | | 3 | 1,50 | 278 | " |
| | | | 4 | 1,58 | 298 | " |

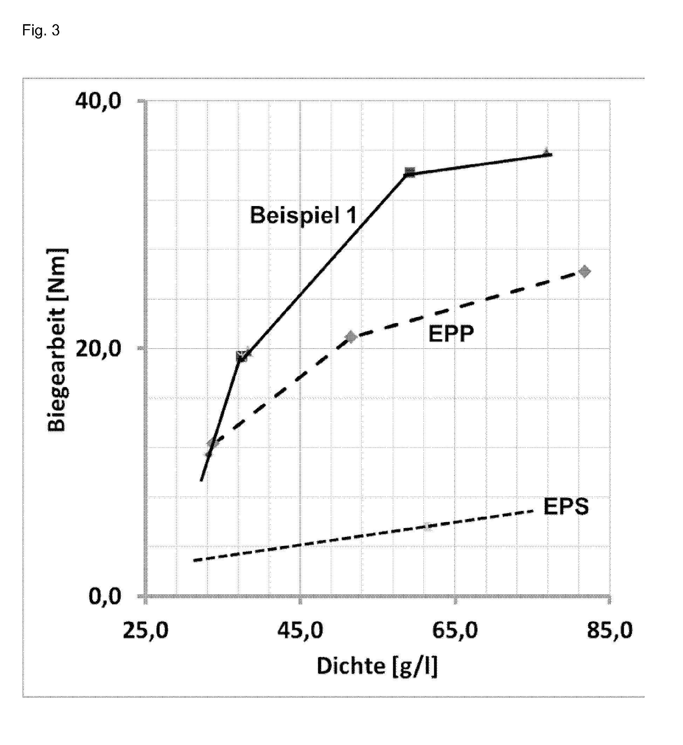

Von den so erhaltenen Formteilen wurde die Biegearbeit nach EN 12089 mit expandiertem Polypropylen (EPP) und expandiertem Polystyrol (EPS) (Styropor, BASF SE) verglichen. Die Ergebnisse sind in der Figur 3 abgebildet.

### Beispiel 2

Das Beispiel 1 wurde wiederholt, nur wurde als TPU-Komponente ein TPU-Minigranulat, welches 0.5 Gew.-% Talkum aus Elastollan 1180A (TPU auf Basis von MDI, PolyTHF 1000, PolyTHF 2000 und Butandiol) der BASF Polyurethanes GmbH eingesetzt.

### Beispiel 3

In einem 5 l Polyethylenkanister wurden 10,5 g Dicumylperoxid (Perkadox BC-FF, *AkzoNobel)* in 2,10 kg Styrol gelöst und 1,40 kg TPU-Minigranulat, welches 0,5 Gew.-% Talkum enthielt (Elastollan 1170AU), versetzt. Das Gemisch wurde30 Minuten bei Raumtemperatur auf einem Rüttelbrett gemischt.

Anschließend wurde der Ansatz in einen 10 l EPS-Reaktor [Druckautoklave (20 bar) mit Blattrührer; Rührerdrehzahl 300 U/Min.] überführt. In dem Reaktor wurden 3,50 kg VE Wasser, 1,07 kg MPP-Fällung und 56 g einer 2%-igen Lösung des Emulgators E30 (Alkansulfonat, CAS68188-18-1) (*Fa. Leuna Tenside GmbH*) vorgelegt. Man erhitzte die Suspension innerhalb von 30 Minuten auf 50 °C und hielt die Temperatur zwecks Quellung drei Stunden bei 50 °C. Anschließend wurde die Temperatur innerhalb von einer Stunde auf 125 °C erhöht, 60 Minuten nach Erreichen von 125 °C wurden 314 g Pentan-S (*Fa. Haltermann* / *Fa. Exxon*) innerhalb von 60 Minuten nachdosiert. Die Temperatur von 125 °C wurde für weitere 5,5 Stunden gehalten, danach wurde der Reaktor auf Raumtemperatur gekühlt. Die Aufarbeitung und Verarbeitung der Partikelförmigen Polymerisate erfolgte analog Beispiel 1.

### Beispiel 4

Das Beispiel 3 wurde wiederholt, als TPU aber Minigranulat der Type 1170AU mit 0.5 Gew.-% Talkum eingesetzt.

### Anwendungsbeispiel 1: Expandierverhalten von Materialien aus Beispiel 1 und 2

4g Polymerisat aus Beispiel 1 oder 2 wurde in mit Gummi-Septum verschließbare Injektionsflaschen (Fa. Max Wiegand, Größe 75 X 23 mm, Pos-Nr.: 4382602) abgefüllt und verschlossen. Nach definierter Lagerzeit wurden die Ampullen geöffnet und das Material in einem Standard Styropor-Vorschäumer drucklos vorgeschäumt (Bedampfungszeit 300 s). Die Schüttdichte der Schüttung wurde anschließend durch Auslitern bestimmt.

| | | | | | | | |
|---|---|---|---|---|---|---|---|
| Beispiel 1 | Lagerzeit (Tagen] | 3 | 12 | 19 | 26 | 40 | 47 |
| | Schäumzeit [s] | 300 | 300 | 300 | 300 | 300 | 300 |
| | Dichte [g/l] | 26 | 37 | 94 | 95 | 400 | 400 |
| | | | | | | | |
| Beispiel 2 | Lagerzeit (Tagen] | 0 | 18 | 25 | 39 | 46 | 53 |
| | Schäumzeit [s] | 200 | 200 | 300 | 300 | 300 | 300 |
| | Dichte [g/l] | 26 | 51 | 40 | 58 | 63 | 64 |

Das Material aus Beispiel 2 lässt sich nach 19 Tagen Lagerung auf eine Dichte von 94 g/l vorschäumen, während das Material aus Beispiel 1 sogar nach 53 Tagen Lagerung auf eine Dichte von 64 g/l vorgeschäumt werden kann.

### Anwendungsbeispiel 2

Analog der in Beispiel 1 beschriebenen Prozedur wurde das zum Anquellen verwendete Styrol mit 0.3 Gew% Lumogen Rot versetzt. Der nach der Verarbeitung erhaltene Schaumstoff besaß eine rote Farbe.

### Anwendungsbeispiel 3

Analog der in Beispiel 1 beschriebenen Prozedur wird das zum Anquellen verwendete Styrol mit 0.3 Gew% Lumogen Grün versetzt. Der nach der Verarbeitung erhaltene Schaumstoff besaß eine grüne Farbe.

### Vergleichsbeispiel 1:

Beispiel 1 wurde mit folgenden Veränderungen wiederholt. Bei der Polymerisation 1.2 wurde anstelle eines Styrol durchtränkten TPU, 965 g reines TPU Mikrogranulat eingesetzt. Die erhaltenen Treibmittelhaltigen TPU Partikel ließen sich nicht mehr zu expandierbaren Schaumstoffpartikel vorschäumen.

## Patentansprüche

1. Expandierbare Polymerpartikel, enthaltend mindestens ein thermoplastisches Polyurethan (TPU) mit einer Vicat-Temperatur (nach ISO 306/ASO) von unter 80°C und 5 bis 95 Gew.-%, mindestens eines durch radikalische Polymerisation erhältlichen Polymers, bezogen auf die Summe von TPU und dem durch radikalische Polymerisation erhältlichen Polymer, wobei das Styrolpolymer als Kamm-, Pfropf- oder Copolymer an das TPU gebunden sind.

2. Expandierbare Polymerpartikel gemäß Anspruch 1, wobei das durch radikalische Polymerisation erhältliche Polymer ein Styrolpolymer ist.

3. Expandierbare Polymerpartikel gemäß Anspruch 2, wobei das Styrolpolymer Polystyrol ist.

4. Expandierbare Polymerpartikel gemäß einem der Ansprüche 1 bis 3, wobei die Vicat-Temperatur im Bereich von 60 bis 75 °C liegt.

5. Expandierbare Polymerpartikel gemäß einem der Ansprüche 1 bis 4 mit einer Shore-Härte des TPU im Bereich von 50 bis 150.

6. Expandierbare Polymerpartikel gemäß einem der Ansprüche 1 bis 5, wobei das TPU eine Glasübergangstemperatur im Bereich von -20 bis -60 °C hat.

7. Expandierbare Polymerpartikel gemäß einem der Ansprüche 1 bis 6, wobei das TPU erhältlich ist aus 2,2-Diphenylmethandiisocyanat, Polytetrahydrofuranen und 1,4-Butendiol.

8. Expandierbare Polymerpartikel gemäß Anspruch 7, wobei die Polytetrahydrofurane Polytetrahydrofuran 1000 und Polytetrahydrofuran 2000 sind.

9. Verfahren zur Herstellung expandierbarer Polymerpartikel, umfassend die Schritte
a) Dispergieren eines oder mehrerer TPU mit einer Vicat-Temperatur von weniger als 80°C, 5 bis 95 Gew.-% eines oder mehrerer radikalisch polymerisierbarer Monomere, bezogen auf die Summe aus TPU und den genannten Monomeren, eines Polymerisationsinitiators, eines Dispergiermittels und gegebenenfalls weiterer Zusatzstoffe und/oder Polymerisationshilfsstoffe in einem wässrigen Medium bei einer Temperatur, bei der keine substantielle Polymerisation der Monomere erfolgt;
b) gegebenenfalls Rühren der erhaltenen Dispersion für eine bis 24 h bei einer Temperatur, bei der keine substantielle Polymerisation der Monomere stattfindet.
c) Polymerisation der Monomere in Form eines Kamm-, Pfropf- oder Copolymers an das TPU, und
d) Zugabe eines physikalischen Treibmittels zu der wässrigen Suspension.

10. Verfahren gemäß Anspruch 9, **dadurch gekennzeichnet, dass** die Polymerisation in Gegenwart eines bromierten organischen und/oder phosphorhaltigen Flammschutzmittels und/oder organischer Peroxide durchgeführt wird.

11. Verfahren gemäß Anspruch 9 oder 10, **dadurch gekennzeichnet, dass** die Polymerisation in Gegenwart eines Vernetzers durchgeführt wird.

12. Verfahren gemäß einem der Ansprüche 9 bis 11, **dadurch gekennzeichnet, dass** unterhalb der Polymerisationstemperatur das thermoplastische Polyurethan in einer Lösung aus radikalisch polymerisierbaren Monomeren, Initiator sowie gegebenenfalls Hilfs- und Zusatzstoffen angequollen wird und die Polymerisationstemperatur deutlich oberhalb der Temperatur liegt, bei welcher der Anquellvorgang durchgeführt wird.

13. Verfahren gemäß Anspruch 12, wobei die Polymerisation zwischen 110 und 140°C und das Anquellen zwischen 10 und 60°C erfolgt.

14. Verfahren gemäß einem der Ansprüche 9 bis 13, **dadurch gekennzeichnet, dass** die Einarbeitung des Treibmittels oberhalb von 100° Celsius erfolgt.

15. Verfahren gemäß einem der Ansprüche 9 bis 14, **dadurch gekennzeichnet, dass** die wässrige Phase einen Pickeringstabilisator in Kombination mit einem Tensid und/oder eines Schutzkolloides enthält.

16. Expandierte Polymerpartikel, erhältlich durch Vorschäumen expandierbarer Polymerpartikel gemäß einem der Ansprüche 1 bis 8.

17. Schaumformteil, erhältlich aus expandierten Polymerpartikeln gemäß Anspruch 16.

18. Verwendung eines Schaumformteils gemäß Anspruch 12 als Fußbodenbelag, Dämmmaterial, in Schuhsohlen und/oder Stoßstangen.
